# EUROPÄISCHE PATENTSCHRIFT

(11) **EP 1 647 730 B1**
(45) Veröffentlichungstag und Bekanntmachung des Hinweises auf die Patenterteilung: **17.06.2009**
(21) Anmeldenummer: 05022231.4
(22) Anmeldetag: 12.10.2005
(51) Int. Cl.: F16D 23/02, F16D 23/04, F16D 23/06

(54) **Synchronkupplung**
Synchroniser clutch
Embrayage de synchronisation

(30) Priorität: 18.10.2004 DE 102004050622
(43) Veröffentlichungstag der Anmeldung: 19.04.2006
(73) Patentinhaber: AUDI AG, 85045 Ingolstadt (DE)
(72) Erfinder: Rusteberg, Stefan, 85049 Ingolstadt (DE); Paschen, Jens, 85139 Wettstetten (DE)
(74) Vertreter: Lehle, Josef

(56) Entgegenhaltungen:
- EP-A- 0 272 134
- DE-A1- 2 055 345
- GB-A- 576 487
- US-A- 3 020 991

## Beschreibung

Die Erfindung betrifft eine Synchronkupplung zum Schalten von Gängen in Geschwindigkeits-Wechselgetrieben von Kraftfahrzeugen gemäß dem Oberbegriff des Patentanspruches 1.

Derartige Synchronkupplungen mit einer sogenannten Außenkonussynchronisierung, bei der der Reibkonus des Synchronringes an dessen Außenumfang ausgebildet ist, sind vielfach z.B. aus EP 272 134 A2 oder GB 576 487 bekannt und bewährt. Es hat sich aber gezeigt, dass durch Abrieb an den radial innerhalb der Reibkonen liegenden Verzahnungen (am Gangzahnrad, an der Schaltmuffe und am Synchronring) Störungen beim Synchronisiervorgang auftreten können.

Aufgabe der Erfindung ist es, eine Synchronkupplung der gattungsgemäßen Art mit einfachen Mitteln derart weiterzubilden, dass durch Abrieb bedingte Störungen vermieden sind.

Diese Aufgabe wird mit den Merkmalen des Patentanspruches 1 gelöst. Vorteilhafte Weiterbildungen der Erfindung beinhalten die weiteren Patentansprüche.

Erfindungsgemäß wird vorgeschlagen, dass radial außerhalb der besagten Verzahnungen in der Schaltmuffe und/oder im Synchronring in Zentrifugalrichtung vor dem Außenkonus und dem Innenkonus liegende Vertiefungen vorgesehen sind. Die mit fertigungstechnisch geringem Aufwand eingeformten oder eingearbeiteten Vertiefungen bilden vor den Reibkonen liegende Auffangbecken oder -räume, die den an den Verzahnungen ggf. auftretenden Verschleiß oder Abrieb in Form von Metallpartikeln, etc. aufnehmen bzw. von den Reibkonen fernhalten. Damit wird vermieden, dass bei sich drehender Synchronkupplung durch Zentrifugalwirkung Metallpartikel, etc. nach außen getragen und zwischen den Innenkonus der Schaltmuffe und den Außenkonus des Synchronringes geraten und Störungen verursachen können.

Die Vertiefungen in der Schaltmuffe können bevorzugt durch eine umlaufende Nut gebildet sein, die an den Innenkonus der Schaltmuffe an dessen Übergang in einen radial verlaufenden Abschnitt der Schaltmuffe angeordnet ist. Die Nut kann z.B. fertigungstechnisch einfach mit einem Drehmeißel eingestochen werden.

Dabei können besonders vorteilhaft die Flanken der Nut im Querschnitt gesehen einen Hinterschnitt gegenüber dem radialen Abschnitt der Schaltmuffe und dem Innenkonus bilden.

Des weiteren können auch die Vertiefungen im Synchronring durch eine einfach herstellbare Nut gebildet sein, die in einem Übergangsbereich eines radialen Abschnittes und eines den Außenkonus aufweisenden Ringabschnittes des Synchronringes angeordnet ist. Die Nut kann, je nach geometrischer Form, spanend, ur- oder umformtechnisch eingebracht werden.

Dabei können wiederum die Flanken der Nut im Synchronring im Querschnitt gesehen einen Hinterschnitt gegenüber dem radialen Abschnitt und der angrenzenden Kontur des Ringabschnittes aufweisen.

Alternativ oder zusätzlich zu einer Nut können die Vertiefungen durch eine oder mehrere umfangsverteilte Taschen jeweils im Übergangsbereich zwischen den radialen Abschnitten und den axial verlaufenden Ringabschnitten der Schaltmuffe und/-oder des Synchronringes eingeformt sein. Die Vertiefungen können dabei insbesondere spanlos eingeformt sein, bei aus Nichteisenmetall oder Eisenmetall hergestellten ur- oder umgeformten Synchronringen.

Die Vertiefungen in der Schaltmuffe und/oder im Synchronring können ferner mit einem oder mehreren Durchbrüchen (z.B. Bohrungen) zusammenwirken, die an den Konusflächen der Schaltmuffe und des Synchronringes vorbei nach außerhalb der Synchronkupplung münden. Über diese Durchbrüche könnte ggf. in den Vertiefungen aufgefangener Abrieb unschädlich aus der Synchronkupplung in den Ölsumpf des Wechselgetriebes abgeleitet werden.

Mehrere Ausführungsbeispiele der Erfindung sind im folgenden mit weiteren Einzelheiten näher erläutert. Die schematische Zeichnung zeigt in:
- **Fig. 1**: einen teilweisen Längsschnitt durch eine Synchronkupplung mit Außenkonussynchronisierung zum Schalten von Gängen in Geschwindigkeits-Wechselgetrieben von Kraftfahrzeugen;
- **Fig. 2**: einen Teilschnitt durch den Synchronring der Synchronkupplung nach Fig. 1 mit einer umlaufenden Nut als Vertiefung und Durchbrüchen zur Ableitung von Abrieb; und
- **Fig. 3**: einen weiteren Teilschnitt durch einen Synchronring gemäß Fig. 1 mit Taschen als Vertiefungen.

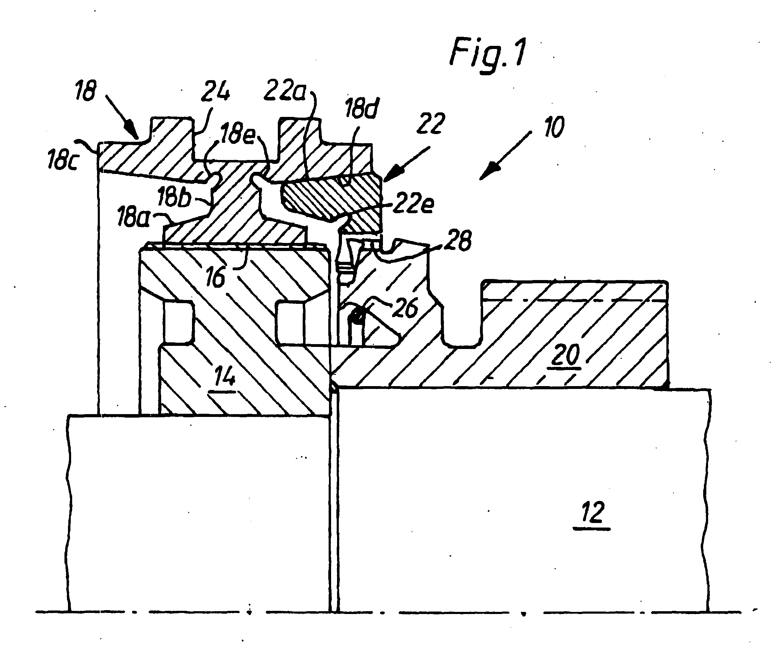

In der **Fig. 1** ist mit 10 eine nur teilweise dargestellte, zweiseitig wirkende Synchronkupplung für ein Geschwindigkeits-Wechselgetriebe in Kraftfahrzeugen bezeichnet, die sich im wesentlichen aus einem auf einer Getriebewelle 12 drehfest angeordnetem Synchronkörper 14, einer auf dem Synchronkörper 14 über eine entsprechende Außen- und Innenverzahnung 16 verschiebbar angeordneten Schaltmuffe 18, einem den Synchronkörper 14 benachbarten Gangzahnrad 20 und einem zwischen der Schaltmuffe 18 und dem Gangzahnrad 20 befindlichen Synchronring 22 zusammensetzt.

Die Synchronkupplung 10 mit Außenkonussynchronisierung ist soweit nicht beschrieben dem Fachmann geläufiger Bauart; die auf der rechten Seite der Zeichnung, **Fig. 1** dargestellte Anordnung von Gangzahnrad und Synchronring ist spiegelbildlich auf der linken Seite der Zeichnung gleich und deshalb nicht weiter dargestellt.

Die rotationssymmetrische Schaltmuffe 18 weist einen Nabenabschnitt 18a, einen im Querschnitt stegförmigen, radialen Abschnitt 18b und einen radial außen liegenden, axial ausgerichteten Ringabschnitt 18c auf, an dem eine Ringnut 24 zum Eingriff einer Schaltgabel (nicht dargestellt) und je Synchronring 22 ein Innenkonus 18d angeordnet sind.

Der Innenkonus 18d wirkt mit einem Außenkonus 22a (= Außensynchronisierung) des Synchronringes 22 zusammen und bilden in bekannter Weise Reibkonen zur Synchronisierung der Drehzahlen zwischen der Getriebewelle 12 bzw. dem Synchronkörper 14 und dem mit der Getriebewelle 12 zu kuppelnden Gangzahnrad 20.

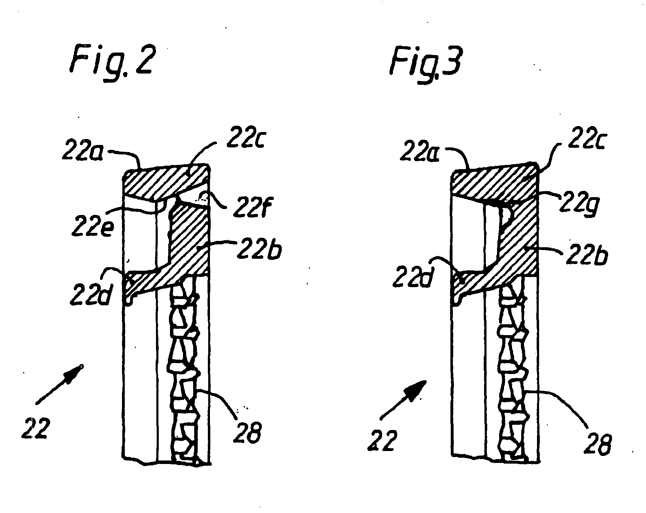

Der Synchronring 22 (vgl. **Fig. 2**) setzt sich dabei zusammen aus einem radial verlaufenden, stegförmigen Abschnitt 22b und einem axial auskragenden Ringabschnitt 22c, der wie ersichtlich den Außenkonus 22a aufweist.

An den stegförmigen Abschnitt 22b (**Fig. 2 und 3**) sind mindestens zwei, zweckmäßig drei oder sechs über den Umfang gleichmäßig verteilte Synchronringlaschen 22d angeformt, die in an sich bekannter Weise den Synchronring 22 im Zusammenwirken mit einer Ringfeder 26 (vgl. **Fig. 1**) in einer definierten Vorspannung zur Schaltmuffe 18 bzw. dem Innenkonus 18d halten.

Ferner ist innerhalb des Außenkonus 22a zwischen dem Gangzahnrad 20 und dem Synchronring 22 eine Verzahnung 28 vorgesehen, die als Sperrverzahnung wirkt und ein Schalten bzw. Kuppeln des Gangzahnrades 20 mit der Getriebewelle 12 in bekannter Weise nur bei Gleichlauf der Synchronkupplung 10 mit dem Gangzahnrad 20 ermöglicht.

Radial außerhalb der Verzahnungen 16, 28 ist in der Schaltmuffe 18 (**Fig. 1**) aus Stahl eine Vertiefung bzw. eine umlaufende Nut 18e vorgesehen, die wie ersichtlich am Übergang vom Abschnitt 18b in den Ringabschnitt 18c eingearbeitet ist und die in Zentrifugalrichtung wie ein Auffangbecken für einen bei den Verzahnungen ggf. entstehenden Abrieb wie Metallpartikel, etc. wirkt.

Dabei sind die Flanken (ohne Bezugszeichen) der Nut 18e derart, dass sie wie ersichtlich einen Hinterschnitt sowohl gegenüber dem radialen Abschnitt 18b bzw. dessen Rotationsebene als auch gegenüber dem anschließenden Innenkonus 18d bzw. dessen Kontur bilden.

Eine weitere als Vertiefung wirkende Nut 22e (**Fig. 1** **und** **2**) ist in den Synchronring 22 eingeformt, die ebenfalls radial außerhalb der Verzahnungen 16, 28 am Übergang vom stegförmigen, radialen Abschnitt 22b in den Ringabschnitt 22c angeordnet ist. Die Nut 22e ist in umformtechnisch hergestellten Synchronring 22 aus einer Messinglegierung unmittelbar eingeformt, wegen der Entformung mit Nutformen entsprechend der Fig. 2 und 3 oder spanend eingebracht, je nach geometrischer Form.

Die Flanken (ohne Bezugszeichen) der Nut 22e im Synchronring 22 sind wiederum mit Hinterschnitt gegenüber dem radialen Abschnitt 22b bzw. dessen Rotationsebene und gegenüber dem Ringabschnitt 22c bzw. dessen innerer Kontur ausgeführt.

Zusätzlich zweigen von der Nut 22e Durchbrüche bzw. eingebrachte, nach außen sich erweiternde Bohrungen 22f ab (vgl. Fig. 2), die nach außerhalb der Synchronkupplung 10 münden und über die ggf. auftretender Abrieb von den Verzahnungen 16, 28 in den Ölsumpf des nicht dargestellten Wechselgetriebes abführbar ist. Derartige Durchbrüche 22f können in nicht dargestellter Weise auch an der Nut 18e der Schaltmuffe 18 vorgesehen sein.

Alternativ oder zusätzlich können an dem Synchronring 22' (vgl. **Fig. 3**) und ggf. an der Schaltmuffe 18 anstelle der Nuten 18e, 22e Taschen 22g vorgesehen sein, die wie ersichtlich im wesentlichen einen gleichen Querschnitt aufweisen können, die sich aber nur teilweise um den Umfang des Synchronringes 22 erstrecken, z.B. drei Taschen 22g mit jeweils einer Umfangslänge von ca. 20 mm im Bereich jeweils einer der drei Synchronringlaschen 22d (es ist in dem Teilschnitt nur eine Lasche 22d ersichtlich).

Ferner können eine Nut 18e, 22e und/oder Taschen 22g nur am Synchronring 22 oder nur an der Schaltmuffe 18 vorgesehen sein.

Bei in Betrieb befindlicher Synchronkupplung 10 werden aufgrund der vorliegenden Drehzahlen durch Abrieb bedingte Metallpartikel, etc. von den Verzahnungen 16 und/oder 28 durch die Zentrifugalwirkung nach außen getragen und in den Vertiefungen 18e, 22e, 22g aufgefangen. Ggf. werden sie ferner über Durchbrüche 22f nach außen aus der Synchronkupplung 10 ausgeschieden.

Jedenfalls wird weitgehendst vermieden, dass Abrieb wie Metallpartikel, etc. zwischen die Reibflächen des Innenkonus 18d und des Außenkonus 22a geraten und Störungen bei Gangwechseln im Wechselgetriebe des Kraftfahrzeuges verursachen.

## Patentansprüche

1. Synchronkupplung zum Schalten von Gängen in Geschwindigkeits-Wechselgetrieben von Kraftfahrzeugen, mit einem auf einer Welle (12) befestigten Kupplungskörper (14), auf dem eine Schaltmuffe (18) mit einer Innenverzahnung (16) verschiebbar gelagert ist, mit zumindest einem dem Kupplungskörper (14) benachbarten Gangzahnrad (20), das mit der Schaltmuffe (18) über eine am Gangzahnrad (20) angeordnete Außenverzahnung kuppelbar ist und mit zumindest einem zwischen der Schaltmuffe (18) und dem Gangzahnrad (20) angeordnetem Synchronring (22), der über einen Außenkonus (22a) mit einem Innenkonus (18d) der Schaltmuffe (18) zusammenwirkt und der eine Innenverzahnung aufweist, die ebenfalls mit der Außenverzahnung des Gangzahnrades (20) in Eingriff ist und ein Schalten des Ganges nur bei Gleichlauf zwischen dem Gangzahnrad (20) und dem Kupplungskörper (14) zulässt, **dadurch gekennzeichnet, dass** radial außerhalb der besagten Verzahnungen (16, 28) in der Schaltmuffe (18) und/oder im Synchronring (22) in Zentrifugalrichtung vor dem Außenkonus (22a) bzw. dem Innenkonus (18d) liegende Vertiefungen (18e, 22e; 22g) vorgesehen sind, die Auffangräume für Abrieb bilden, so dass Abrieb vom Außenkonus bzw. dem Innenkonus ferngehalten wird.

2. Synchronkupplung nach Anspruch 1, **dadurch gekennzeichnet, dass** die Vertiefungen in der Schaltmuffe (18) durch eine umlaufende Nut (18e) gebildet sind, die an den Innenkonus (18d) der Schaltmuffe (18) an dessen Übergang in einen radial verlaufenden Abschnitt (18b) der Schaltmuffe (18) angeordnet ist.

3. Synchronkupplung nach den Ansprüchen 1 und 2, **dadurch gekennzeichnet, dass** die Flanken der Nut (18e) im Querschnitt gesehen einen Hinterschnitt gegenüber dem radialen Abschnitt (18b) der Schaltmuffe (18) und dem Innenkonus (18d) bilden.

4. Synchronkupplung nach einem oder mehreren der vorhergehenden Ansprüche, **dadurch gekennzeichnet, dass** die Vertiefungen im Synchronring (22) durch eine Nut (22e) gebildet sind, die in einem Übergangsbereich eines radialen Abschnittes (22b) und eines den Außenkonus (22a) aufweisenden Ringabschnittes (22c) des Synchronringes (22) angeordnet ist.

5. Synchronkupplung nach Anspruch 4, **dadurch gekennzeichnet, dass** die Flanken der Nut (22e) im Synchronring (22) im Querschnitt gesehen einen Hinterschnitt gegenüber dem radialen Abschnitt (22b) und der angrenzenden Kontur des Ringabschnittes (22c) aufweisen.

6. Synchronkupplung nach Anspruch 1, **dadurch gekennzeichnet, dass** die Vertiefungen durch mehrere umfangsverteilte Taschen (22g) jeweils im Übergangsbereich zwischen den radialen Abschnitten (18b, 22b) und axial verlaufenden Ringabschnitten (18c, 22c) der Schaltmuffe (18) und/oder des Synchronringes (22) eingeformt sind.

7. Synchronkupplung nach einem oder mehreren der vorhergehenden Ansprüche, **dadurch gekennzeichnet, dass** die Vertiefungen in der Schaltmuffe (18) und/oder im Synchronring (22) mit einem oder mehreren Durchbrüchen (22f) zusammenwirken, die an den Konusflächen der Schaltmuffe (18) und des Synchronringes (22) vorbei nach außerhalb der Synchronkupplung (10) münden.

## Claims

1. Synchroniser clutch for changing gears in speed-change gearboxes of motor vehicles, comprising a clutch body (14) fastened onto a shaft (12), and displaceably mounted on said clutch body (14), a sliding coupling (18) with internal teeth (16), and at least one gear wheel (20) adjacent to the clutch body (14) said gear wheel being coupleable to the sliding coupling (18) via external teeth arranged on the gear wheel (20), and at least one synchro ring (22) arranged between the sliding coupling (18) and the gear wheel (20), said synchro ring (22) cooperating with an internal cone (18d) of the sliding coupling (18) via an external cone (22a) and having internal teeth which also engage with the external teeth of the gear wheel (20) and only permits changing of the gear only during synchronism between the gear wheel (20) and the clutch body (14), **characterised in that** recesses (18e, 22e; 22g) are provided situated radially outside said teeth (16, 28) in the sliding coupling (18) and/or in the synchro ring (22), seen in the centrifugal direction, before the external cone (22a) and/or the internal cone (18d), said recesses forming collecting chambers for abraded material so that abraded material is kept away from the external cone and/or the internal cone.

2. Synchroniser clutch according to claim 1, **characterised in that** the recesses in the sliding coupling (18) are formed by a peripheral groove (18e) which is arranged on the internal cone (18d) of the sliding coupling (18) at the transition of said internal cone (18d) to a radially extending section (18b) of the sliding coupling (18).

3. Synchroniser clutch according to claims 1 and 2, **characterised in that,** seen in cross-section, the flanks of the groove (18e) form an undercut relative to the radial section (18b) of the sliding coupling (18) and the internal cone (18d).

4. Synchroniser clutch according to one or more of the preceding claims, **characterised in that** the recesses in the synchro ring (22) are formed by a groove (22e) which is arranged in a transition region of a radial section (22b) and a ring section (22c) of the synchro ring (22) comprising the external cone (22a).

5. Synchroniser clutch according to claim 4, **characterised in that,** seen in cross-section, the flanks of the groove (22e) in the synchro ring (22) comprise an undercut relative to the radial section (22b) and the adjoining contour of the ring section (22c).

6. Synchroniser clutch according to claim 1, **characterised in that** the recesses are formed by a plurality of pockets (22g) distributed round the periphery, each formed in the transition region between the radial sections (18b, 22b) and axially extending ring sections (18c, 22c) of the sliding coupling (18) and/or of the synchro ring (22).

7. Synchroniser clutch according to one or more of the preceding claims, **characterised in that** the depressions in the sliding coupling (18) and/or in the synchro ring (22) cooperate with one or more perforations (22f) which open past the conical surfaces of the sliding coupling (18) and of the synchro ring (22) toward the outside of the synchroniser clutch (10).

## Revendications

1. Embrayage de synchronisation pour le changement de rapports dans des boîtes de changement de vitesses de véhicules automobiles, avec un corps d'embrayage (14) fixé à un arbre (12), sur lequel est logé à coulissement un manchon de commutation (18) avec une denture intérieure (16), avec au moins un pignon de rapport (20) jouxtant le corps d'embrayage (14), qui peut être couplé au manchon de commutation (18) par le biais d'une denture extérieure disposée sur le pignon de rapport (20) et avec au moins un anneau de synchronisation (22) disposé entre le manchon de commutation (18) et le pignon de rapport (20) qui coopère par le biais d'un cône extérieur (22a) avec un cône intérieur (18d) du manchon de commutation (18) et qui présente une denture intérieure qui est également en engagement avec la denture extérieure du pignon de rapport (20) et autorise un changement de rapport uniquement en cas de synchronisme entre le pignon de rapport (20) et le corps d'embrayage (14), **caractérisé en ce que** des cavités (18e, 22e ^{;} 22g) se trouvant radialement en dehors desdites dentures (16, 28) dans le manchon de commutation (18) et/ou dans l'anneau de synchronisation (22) dans le sens centrifuge avant le cône extérieur (22a) ou le cône intérieur (18d) sont prévues, lesquelles formant des espaces de réception pour l'abrasion de sorte que l'abrasion soit maintenue loin du cône extérieur ou du cône intérieur.

2. Embrayage de synchronisation selon la revendication 1, **caractérisé en ce que** les cavités dans le manchon de commutation (18) sont formées par une rainure (18e) périphérique qui est disposée sur le cône intérieur (18d) du manchon de commutation (18) au niveau de son passage en une partie (18b) s'étendant radialement du manchon de commutation (18).

3. Embrayage de synchronisation selon les revendications 1 et 2, **caractérisé en ce que** les flancs de la rainure (18e) forment, vus en section, une contre-dépouille par rapport à la partie (18b) radiale du manchon de commutation (18) et au cône intérieur (18d).

4. Embrayage de synchronisation selon l'une des revendications 1 à 3, **caractérisé en ce que** les cavités dans l'anneau de synchronisation (22) sont formées par une rainure (22e) qui est disposée dans une zone de transition d'une partie (22b) radiale et d'une partie annulaire (22c) présentant le cône extérieur (22a) de l'anneau de synchronisation (22).

5. Embrayage de synchronisation selon la revendication 4, **caractérisé en ce que** les flancs de la rainure (22e) dans l'anneau de synchronisation (22), vus en section, présentent une contre-dépouille par rapport à la partie (22b) radiale et au contour contigu de la partie annulaire (22c).

6. Embrayage de synchronisation selon la revendication 1, **caractérisé en ce que** les cavités sont formées par plusieurs poches (22g) réparties sur la périphérie respectivement dans la zone de transition entre les parties (18b, 22b) radiales et les parties annulaires (18c, 22c) s'étendant axialement du manchon de commutation (18) et/ou de l'anneau de synchronisation (22).

7. Embrayage de synchronisation selon l'une des revendications 1 à 6, **caractérisé en ce que** les cavités dans le manchon de commutation (18) et/ou dans l'anneau de synchronisation (22) coopèrent avec un ou plusieurs percements (22f) qui débouchent devant les surfaces de cône du manchon de commutation (18) et de l'anneau de synchronisation (22) vers l'extérieur de l'embrayage de synchronisation (10).
